# EUROPEAN PATENT SPECIFICATION

(11) **EP 2 717 644 B1**
(45) Date of publication and mention of the grant of the patent: **12.08.2015**
(21) Application number: 13187677.3
(22) Date of filing: 08.10.2013
(51) Int. Cl.: H04W 74/08

(54) **Robust wireless building automation**
Stabile drahtlose Gebäudeautomation
Contrôle automatique de bâtiments sans fil robuste

(30) Priority: 08.10.2012 DK 201200618
(43) Date of publication of application: 09.04.2014
(73) Proprietor: VKR Holding A/S, 2970 Hørsholm (DK)
(72) Inventor: Nielsen, Martin Sandal, 6830 Nørre Nebel (DK)
(74) Representative: Patentgruppen

(56) References cited:
- US-A1- 2007 105 576
- US-A1- 2008 089 279
- US-A1- 2011 028 097
- HU W ET AL: "IEEE P802.22 - Wireless RANs - IEEE 802.22 Wireless RAN Standard PHY and MAC Proposal", INTERNET CITATION, 9 January 2006 (2006-01-09), XP007902891, Retrieved from the Internet: URL:http://www.ieee802.org/22/Meeting_docu ments/2006_Jan/22-05-0098-01-0000_STM-Runc om_PHY-MAC_Outline.doc [retrieved on 2007-09-04]
- ANTONIO DE DOMENICO ET AL: "A Survey on MAC Strategies for Cognitive Radio Networks", IEEE COMMUNICATIONS SURVEYS, IEEE, NEW YORK, NY, US, vol. 14, no. 1, 1 January 2012 (2012-01-01), pages 21-44, XP011420410, ISSN: 1553-877X, DOI: 10.1109/SURV.2011.111510.00108

## Description

### Field

The exemplary and non-limiting embodiments of this invention relate generally to control of building automation and more particularly to wireless communication i.e. how the nodes transmit data on multiple channels.

### Background

Building automation may be used to control windows, doors and access control, lighting, sun screening, heating, alarms, appliances, remote controls etc.

The use of wireless devices is growing and hence the wireless medium is more congested.

Wireless building automation systems often have limited power resources and the communication often has low data rates and limited network activity to keep the power consumption to a minimum.

US2007105576 mentions WIFI and cellular communication and deals with resource utilization, where the master and slave share information about channel quality.

### Summary

It would be desirable to provide robust wireless building automation communication which works in noisy environments.

It would be desirable to provide wireless building automation which is safer and resistant to criminals and signal jamming.

Disturbances in the communication may also delay the commands and affect the real time execution, because the commands are not transmitted within a fixed time.

It is also desirable that the wireless building automation can be powered by limited resources such as battery or solar cell.

To provide one or more of these advantages there is presented a method according to claim 1.

Further favourable embodiments are defined in the dependent claims. Other features and advantages of the disclosed embodiments will appear from the following detailed disclosure, from the attached dependent claims as well as from the drawings. Steps do need not be performed in the disclosed sequence, unless explicitly defined. All references to "a/an/the [element, master, slave, means, step, etc]" are to be interpreted openly as referring to at least one instance of the element, means, step, etc., unless explicitly stated otherwise.

### Brief description of the drawings

The foregoing and other aspects of this invention are made more evident in the following description, when read in conjunction with the attached figures, wherein:
Fig. 1 shows an example of channel carrier sense and noise.
Fig. 2 shows a flow chart of frequency hopping communication.

### Detailed description

The disclosed embodiments will now be described more fully hereinafter with reference to the accompanying drawings, in which certain examples are shown. Like numbers refer to like elements throughout. Wireless building automation control may for example take place between a controller and an appliance or between nodes or between a master and a slave or between a transmitter and a receiver. Hereafter the terms master and slave will be used but it is understood that these terms should not be limiting.

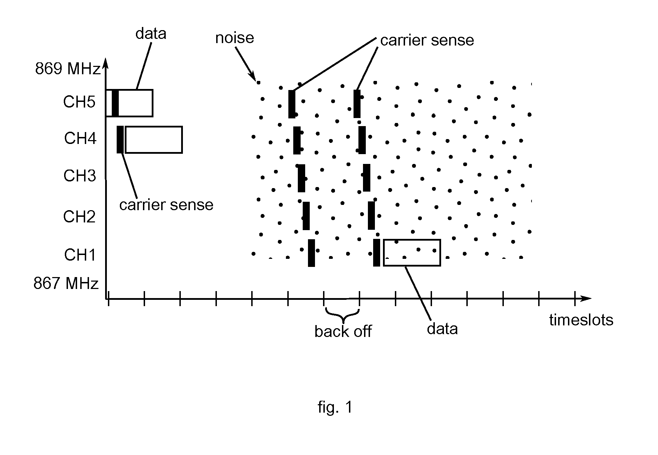

Fig. 1 illustrates 5 channel communication using the channels CH1 - CH5. Collision avoidance is performed by carrier sense, where a transmitter may sense the medium, and if the medium is sensed to be busy, the transmitter waits for the ongoing transmission to finish, waits for a random amount of back off time, and then tries to sense/transmit again. When combined with channel hopping the carrier sense simply senses other channels to find a vacant channel. In the figure channel 5 is busy, but when carrier select is done on channel 4 the channel is vacant and data is transmitted in next time slot. Such channel hopping and duty cycle time slots usually enable robust communication. However noise or interference may cause a problem, because certain channels or all channels may seem noisy which results in no free channels available. Transmitters cannot find a free channel because the carrier sense algorithm described above will see the noise as communication. Similarly criminals may use jamming to stop the communication.

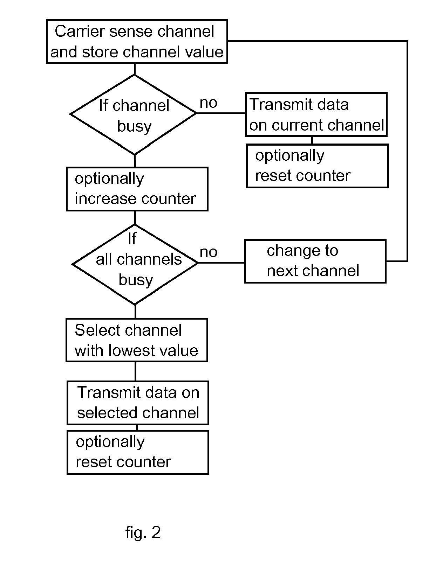

It is proposed to provide a first operation, when a vacant channel is available and a second operation, when no vacant channel is available. Carrier sense is performed on the respective channels to establish at least one vacant channel and then transmit a message on said at least one vacant channel. When no vacant channel is available a second operation is employed:
the carrier sense is done for a limited time or limited number of cycles where the channel quality is registered and ranked
at least one channel among the ranked channels is selected based on the registered channel quality
and data is transmitted on the selected channel even when the channel is not vacant.
The two operation modes are explained for sake of simplicity. In reality the method may be implemented in one integrated algorithm, which performs the carrier sense and optionally with back off and forces transmission after a number of carrier sense even when the medium is busy. This is illustrated on the flow chart on fig. 2.
Hereby a robust system is provided, which ensures the automation system is not blocked by noise, interference or jamming.
The channel quality and channel ranking may employ one or more thresholds as explained later. The carrier sense is done for a defined time for example corresponding to the time needed to carrier sense each of the available channels. A defined time may be understood as the carrier sense on the channels may be done for a fixed time period before forcing the transmission. A defined time may be understood as the carrier sense may be done a number of iterations on the channels before forcing the transmission. The defined time preferably corresponds to at least the time needed to carrier sense all the channels.
In one example where transmission power level is adjusted, the second operation with forced transmission preferably transmits at the maximum power level.
In one example the data transmissions have multiple priority levels and the forced transmission i.e. second operation is employed by high level priority transmissions like safety and/or security command transmissions.
In one example an average value or maximum value threshold may be established or combinations thereof. Generally a channel may be considered busy if the channel noise is above a threshold and the channel noise may for example be calculated as an average or a maximum from n samples.
The channel quality may be established based on several signals. Preferably signal intensity is registered for each channel and the transmission is forced on the channel with the lowest registered signal intensity. i.e. the selected channel which substantially has the best vacancy. Best vacancy may be selected by ranking the channel with lowest signal intensity, lowest noise or highest signal to noise ratio.
Optionally the carrier sense first includes a light scan and the second operation may include a deep scan, wherein the light scan may detect the current channel energy and the deep scan may employ more processing like average or maximum value or comparison with old values etc. Hereby the channel for forced transmission may be selected based on greater logic. The building automation may be a bi-directional master and a bi-directional slave, where both the master and slave perform the forced transmission method to ensure robust communication.
In one example of the method an off time for transmission on a channel, initiated by one and the same node, is proposed, meaning that a node, e.g. a master, a slave, a transmitter, etc. is prohibited from gaining access to the same channel again within the predetermined off time. This may apply to the first operation as well as the second operation.
Thus, the first operation may comprise the step of testing the at least one vacant channel for previous transmission within a predetermined off time, which previous transmission has been initiated by the actual node, e.g. master or slave, which is searching for a vacant channel in order to transmit a message. In case the testing is affirmative, another channel has to be used, e.g. selected in accordance with the procedure of the first operation. This another channel may also be required to fulfil the "off time" requirement. Also the second operation may comprise a step of testing the at least one selected channel for previous transmission within a predetermined off time, which previous transmission has been initiated by the testing node, e.g. master or slave. In case the testing is affirmative another channel has to be used, e.g. another one of the ranked channels is selected instead. This another channel may also be required to fulfil the "off time" requirement.
The predetermined off time may be the same for the two operations or the off times may differ for the two operations.

It will be understood that the embodiments described herein are merely exemplary and that variations and modifications of the teachings will still fall within the scope of this invention. For example the carrier sense may be randomly or sequentially organized. For example spread spectrum where the communication is spread on the channels may be employed for all communication or optionally for forced transmission only.
Furthermore, some of the features of the examples of this disclosure may be used to advantage without the corresponding use of other features. As such, the foregoing description should be considered as merely illustrative of the principles and examples of this invention, and not a limitation thereof.

## Claims

1. A method of wireless building automation communication between building automation components such as gates, doors, windows, sunscreen, heating, lightning, alarms, remote controls,
the wireless communication employing multiple channels with channel hopping,
and carrier sense by listening on a channel before transmission,
including
a first operation, when a vacant channel is available by performing a carrier sense on the respective channels to establish at least one vacant channel and then transmit a message on said at least one vacant channel and
a second operation, when no vacant channel is available
wherein
- the carrier sense is done for a defined time,
- and the channel quality is registered,
- and the registered channel quality is ranked,
- selecting among the ranked channels at least one channel,
- and transmit a message with a transmission power level on the at least one selected channel even when the channel is not vacant.

2. A method according to previous claim wherein channel quality is indicative of the channel vacancy.

3. A method according to any previous claims wherein channel quality is based at least on the energy, signal intensity, noise or signal to noise ratio.

4. A method according to any previous claim wherein the at least one selected channel substantially has the best vacancy.

5. A method according to any previous claim wherein the defined time for carrier sense is a fixed time corresponding to the time needed to carrier sense each of the channels.

6. A method according to any previous claim wherein the defined time for carrier sense is defined by a number of channel sense iterations, and when no vacant channel is detected the second operation is employed.

7. A method according to any previous claim wherein the transmission power level is substantially the maximum transmission power.

8. A method according to any of claims 1-6 wherein the transmission power level is boost power, higher than the average transmission power level.

9. A method according to any previous claim wherein the transmissions have multiple priority levels and the second operation is employed by high priority transmissions for example safety and/or security transmissions.

10. A method according to any previous claim wherein the communication employs frequency hopping on all available channels and duty cycle time slots.

11. A method according to any previous claim wherein the method is employed by both a bi-directional master and a bi-directional slave.

12. A method according to any previous claim wherein the first operation may be a light scan and the second operation may be a deep scan, wherein the light scan may detect the current channel energy and the deep scan employs more processing such as average or maximum value.

13. A method according to any previous claim wherein said first operation comprises testing said at least one vacant channel for previous transmission within a predetermined off time, said previous transmission having been initiated by the testing node, e.g. master or slave, and if the testing is affirmative proceeding to another channel.

14. A method according to any previous claim wherein said second operation comprises testing said at least one selected channel for previous transmission within a predetermined off time, said previous transmission having been initiated by the testing node, e.g. master or slave, and if the testing is affirmative proceeding to another channel.

15. A method according to any previous claim wherein the method is employed by a building automation component with limited power resources such as batteries or solar cell.

## Patentansprüche

1. Verfahren zur funkbasierten Kommunikation in der Gebäudeautomation zwischen Komponenten der Gebäudeautomation, wie etwa Toren, Türen, Fenstern, Sonnenblenden, Heizungen, Beleuchtungen, Alarmen, Fernbedienungen,
wobei die funkbasierte Kommunikation mehrere Kanäle und Kanal-Hopping einsetzt,
sowie eine Trägerprüfung, indem vor einer Übertragung auf einem Kanal gehorcht wird,
das Folgendes umfasst:
einen ersten Vorgang, wenn ein freier Kanal verfügbar ist, bei dem auf den entsprechenden Kanälen eine Trägerprüfung ausgeführt wird, um wenigstens einen freien Kanal festzulegen, und anschließend auf dem wenigstens einen freien Kanal eine Nachricht übertragen wird, und
einen zweiten Vorgang, wenn kein freier Kanal verfügbar ist,
bei dem
- die Trägerprüfung für eine definierte Zeitspanne ausgeführt wird,
- und die Kanalqualität erfasst wird,
- und die erfasste Kanalqualität eingeordnet wird,
- unter den eingeordneten Kanälen wenigstens ein Kanal ausgewählt wird,
- und eine Nachricht mit einem Übertragungsleistungspegel auf dem wenigstens einen ausgewählten Kanal übertragen wird, und dies selbst dann, wenn der Kanal nicht frei ist.

2. Verfahren nach dem vorhergehenden Anspruch, wobei die Kanalqualität die Verfügbarkeit des Kanals anzeigt.

3. Verfahren nach einem der vorhergehenden Ansprüche, wobei die Kanalqualität wenigstens auf der Energie, der Signalstärke, dem Rauschen oder dem Signal-Rausch-Verhältnis basiert.

4. Verfahren nach einem der vorhergehenden Ansprüche, wobei der wenigstens eine ausgewählte Kanal im Wesentlichen die beste Verfügbarkeit hat.

5. Verfahren nach einem der vorhergehenden Ansprüche, wobei die definierte Zeitspanne zur Trägerprüfung eine feste Zeitspanne ist, die der Zeitspanne entspricht, die benötigt wird, um auf jedem der Kanäle eine Trägerprüfung durchzuführen.

6. Verfahren nach einem der vorhergehenden Ansprüche, wobei die definierte Zeitspanne zur Trägerprüfung durch eine Zahl Trägerprüfungsiterationen definiert ist und, falls kein freier Kanal detektiert wird, der zweite Vorgang angewendet wird.

7. Verfahren nach einem der vorhergehenden Ansprüche, wobei der Übertragungsleistungspegel im Wesentlichen gleich der maximalen Übertragungsleistung ist.

8. Verfahren nach einem der Ansprüche 1 bis 6, wobei der Übertragungsleistungspegel eine erhöhte Leistung, höher als der mittlere Übertragungsleistungspegel, ist.

9. Verfahren nach einem der vorhergehenden Ansprüche, wobei die Übertragungen mehrere Prioritätspegel haben und der zweite Vorgang von Übertragungen mit hoher Priorität angewendet wird, beispielsweise Übertragungen zur Sicherheit gegen Unfälle und/oder Verbrechen.

10. Verfahren nach einem der vorhergehenden Ansprüche, wobei die Kommunikation Frequenz-Hopping auf allen vorhandenen Kanälen und Tastgrad-Zeitschlitzen anwendet.

11. Verfahren nach einem der vorhergehenden Ansprüche, wobei das Verfahren sowohl von einem bidirektionalen Master als auch von einem bidirektionalen Slave angewendet wird.

12. Verfahren nach einem der vorhergehenden Ansprüche, wobei der erste Vorgang beispielsweise ein oberflächlicher Scanvorgang und der zweite Vorgang beispielsweise ein genauer Scanvorgang ist, wobei der oberflächliche Scanvorgang beispielsweise die momentane Kanalenergie detektiert und der genaue Scanvorgang mehr Verarbeitung anwendet, wie etwa den mittleren oder maximalen Wert.

13. Verfahren nach einem der vorhergehenden Ansprüche, wobei der erste Vorgang das Prüfen des wenigstens einen freien Kanals in Bezug auf eine vorhergehende Übertragung innerhalb einer vorgegebenen Sperrzeit umfasst, wobei die vorhergehende Übertragung vom prüfenden Knoten, also dem Master oder Slave, ausgelöst wurde, und, falls das Prüfen positiv ausfällt, das Weitergehen zu einem anderen Kanal.

14. Verfahren nach einem der vorhergehenden Ansprüche, wobei der zweite Vorgang das Prüfen des wenigstens einen ausgewählten Kanals in Bezug auf eine vorhergehende Übertragung innerhalb einer vorgegebenen Sperrzeit umfasst, wobei die vorhergehende Übertragung vom prüfenden Knoten, also dem Master oder Slave, ausgelöst wurde, und, falls das Prüfen positiv ausfällt, das Weitergehen zu einem anderen Kanal.

15. Verfahren nach einem der vorhergehenden Ansprüche, wobei das Verfahren von einer Komponente der Gebäudeautomation eingesetzt wird, die begrenzte Energiequellen hat, wie etwa Batterien oder Solarzellen.

## Revendications

1. Procédé de communication sans fil d'automatisation d'immeuble entre des composants d'automatisation d'immeuble, tels que des portails, des portes, des fenêtres, des stores, le chauffage, l'éclairage, des alarmes, des télécommandes,
la communication sans fil utilisant de multiples canaux avec un saut de canaux,
et une détection de porteuse par une écoute sur un canal avant la transmission, comprenant
une première opération, lorsqu'un canal vacant est disponible,
en effectuant une détection de porteuse sur les canaux respectifs afin d'établir au moins un canal vacant puis transmettre un message sur ledit au moins un canal vacant et
une seconde opération, lorsqu'aucun canal vacant n'est disponible,
dans laquelle
- la détection de porteuse est effectuée pendant un temps défini,
- et la qualité de canal est enregistrée,
- et la qualité de canal enregistrée est classée,
- une sélection d'au moins un canal est effectuée parmi les canaux classés,
- et un message est transmis avec un niveau de puissance de transmission sur l'au moins un canal sélectionné, même quand le canal n'est pas vacant.

2. Procédé selon la revendication précédente, dans lequel la qualité de canal est indicative de la vacance de canal.

3. Procédé selon l'une quelconque des revendications précédentes, dans lequel la qualité de canal est basée au moins sur l'énergie, l'intensité de signal, le bruit ou le rapport signal-bruit.

4. Procédé selon l'une quelconque des revendications précédentes, dans lequel ledit au moins un canal sélectionné a sensiblement la meilleure vacance.

5. Procédé selon l'une quelconque des revendications précédentes, dans lequel le temps défini pour la détection de porteuse est un temps fixe correspondant au temps nécessaire pour détecter la porteuse de chacun des canaux.

6. Procédé selon l'une quelconque des revendications précédentes, dans lequel le temps défini pour la détection de porteuse est défini par un nombre d'itérations de détection de canal, et, lorsqu'aucun canal vacant n'est détecté, la seconde opération est utilisée.

7. Procédé selon l'une quelconque des revendications précédentes, dans lequel le niveau de puissance de transmission est sensiblement la puissance de transmission maximale.

8. Procédé selon l'une quelconque des revendications 1 à 6, dans lequel le niveau de puissance de transmission est une puissance de suralimentation, supérieure au niveau de puissance de transmission moyen.

9. Procédé selon l'une quelconque des revendications précédentes, dans lequel les transmissions ont de multiples niveaux de priorité et la seconde opération est utilisée par des transmissions à haute priorité, par exemple des transmissions de sécurité et/ou sûreté.

10. Procédé selon l'une quelconque des revendications précédentes, dans lequel la communication emploie un saut de fréquence sur tous les canaux disponibles et des intervalles de temps du cycle de service.

11. Procédé selon l'une quelconque des revendications précédentes, dans lequel le procédé est utilisé par un élément maître bidirectionnel et un élément asservi bidirectionnel.

12. Procédé selon l'une quelconque des revendications précédentes, dans lequel la première opération peut être un balayage lumineux et la seconde opération peut être un balayage en profondeur, dans lequel le balayage lumineux peut détecter l'énergie du canal en cours et le balayage en profondeur emploie davantage de traitement comme une valeur moyenne ou maximale.

13. Procédé selon l'une quelconque des revendications précédentes, dans lequel ladite première opération comprend le test dudit au moins un canal vacant pour une transmission préalable dans un temps de marche à vide prédéterminé, ladite transmission préalable ayant été lancée par le noeud de test, par exemple maître ou esclave, et, si le test est positif, le passage à un autre canal.

14. Procédé selon l'une quelconque des revendications précédentes, dans lequel ladite seconde opération comprend le test dudit au moins un canal sélectionné pour une transmission préalable dans un temps de marche à vide prédéterminé, ladite transmission préalable ayant été lancée par le noeud de test, par exemple maître ou esclave, et, si le test est positif, le passage à un autre canal.

15. Procédé selon l'une quelconque des revendications précédentes, dans lequel le procédé est utilisé par un composant d'automatisation d'immeuble ayant des ressources électriques limitées, tel que des batteries ou des piles solaires.
